# EUROPÄISCHE PATENTSCHRIFT

(11) **EP 3 093 269 B1**
(45) Veröffentlichungstag und Bekanntmachung des Hinweises auf die Patenterteilung: **13.03.2019**
(21) Anmeldenummer: 16169183.7
(22) Anmeldetag: 11.05.2016
(51) Int. Cl.: C01B 25/18, C01B 25/22, C25B 1/20, C25B 1/22, C25B 9/08, C01F 1/00, C01F 11/00

(54) **ELEKTRODIALYTISCHE HERSTELLUNG VON PHOSPHORSÄURE UND VORRICHTUNG**
ELECTRODIALYTIC PREPARATION OF PHOSPHORIC ACID AND DEVICE
PRODUCTION ELECTRODIALYTIQUE D'ACIDES PHOSPHORES ET DISPOSITIF

(30) Priorität: 11.05.2015 DE 102015208690
(43) Veröffentlichungstag der Anmeldung: 16.11.2016
(73) Patentinhaber: Technische Universität Bergakademie Freiberg, 09599 Freiberg (DE)
(72) Erfinder: Bertau, Martin, Prof. Dr., 09599 Freiberg (DE); Martin, Gunther, 09599 Freiberg (DE)
(74) Vertreter: Kailuweit & Uhlemann Patentanwälte Partnerschaft mbB

(56) Entgegenhaltungen:
- EP-A1- 0 577 207
- EP-A2- 2 465 600
- DE-A1- 2 028 487
- JP-B1- S4 328 006
- US-A- 3 705 846
- G S Trivedi ET AL: "Studies on bipolar membranes Part III: conversion of sodium phosphate to phosphoric acid and sodium hydroxide", Reactive & Functional Polymers, 1. Januar 1999 (1999-01-01), Seiten 91-97, XP055303471, Gefunden im Internet: URL:http://ac.els-cdn.com/S138151489700159 4/1-s2.0-S1381514897001594-main.pdf?_tid=e 9e11c9c-7c1c-11e6-be0f-00000aab0f6b&acdnat =1474037610_177b11099b5aea36da318acdabeec7 0a [gefunden am 2016-09-16]
- XIAOLIN WANG ET AL: "Phosphate Recovery from Excess Sludge by Conventional Electrodialysis (CED) and Electrodialysis with Bipolar Membranes (EDBM)", INDUSTRIAL & ENGINEERING CHEMISTRY RESEARCH., Bd. 52, Nr. 45, 13. November 2013 (2013-11-13), Seiten 15896-15904, XP055238154, US ISSN: 0888-5885, DOI: 10.1021/ie4014088

## Beschreibung

Die vorliegende Erfindung betrifft ein Verfahren zur elektrodialytischen Herstellung von Phosphorsäure und Calciumhydroxid aus Calciumphosphatsalzen sowie eine Vorrichtung zu deren Herstellung.

Die Elektrodialyse ist ein elektrophysikalisches Trennverfahren, welches auf der Wanderung von geladenen Ionen unter dem Einfluss eines elektrischen Feldes und Verwendung selektiver lonenaustauschermembranen beruht. Die Elektrodialyse wird u.a. im 2-Kammerverfahren für die Säurerückgewinnung aus verbrauchten Beizsäuren (HNO₃, HF) großtechnisch eingesetzt (DE 41 31 793 A1, DE 44 35 232 A1).

Unter Verwendung von bipolaren Membranen (DE 10 2004 012 334 A1) können salzhaltige Ausgangslösungen im 3- bzw. 4-Kammer-Elekrodialyseprozess in Säuren und Basen aufgespalten werden. Durch Anlegen eines elektrischen Feldes setzt ein lonentransport ein, wobei Anionen zur Anode und Kationen zur Kathode wandern. Unter zusätzlicher Verwendung von lonenaustauschermembranen (Anionenaustauschermembranen - hohe Permeabilität für Anionen, und Kationenaustauschermembranen - hohe Permeabilität für Kationen) erfolgt eine Auftrennung in die Stoffströme Diluat (abgereicherte Ausgangslösung), Säure und Base. Die alternierend angeordneten Membranen werden in einem Membranstack eingefasst. (Ohlrogge K. (Ed.) Membranen. Grundlagen, Verfahren und industrielle Anwendungen, Wiley-VCH, Weinheim, 2006, 429)

JP S43-28006 B offenbart ein Verfahren zur Herstellung von Phosphorsäure durch elektrodialytische Trennung einer verunreinigten wässrigen Lösung von Calciumdihydrogenphosphat in einer 4-Kammerelektrodialyse. Einer der 4 Prozessströme führt die Ca(H₂PO₄)₂-Lösung, aus der während des Prozesses die Ca²⁺-Kationen aus durch eine Kationenaustauschermembran Richtung Kathode wandern und mittels einer NaCl-Lösung in einem weiteren Prozessstrom zu Calciumchlorid abreagieren. Die PO₄³⁻-Anionen migrieren in den Strom einer verdünnten Phosphorsäurelösung, wo sie mit den ebenfalls in diesen Strom migrierten Protonen einer verdünnten Salzsäure zu Phosphorsäure reagieren und diese anreichern. Nachteilig gelingt mit diesem Verfahren lediglich die Herstellung sehr verdünnter Phosphorsäure.

Anwendungsmöglichkeiten für den bipolaren Elektrodialyseprozess sind hinlänglich bekannt und reichen von der Spaltung von Metallsalzen zur Gewinnung anorganischer Säuren und Basen (DE 10 2009 010 264 A1) bis zur Gewinnung organischer Säuren, wie Milchsäure, aus Natriumlactat (EP 0 346 983 A2).

Die Anwendbarkeit des Prozesses zur Herstellung von organischen oder anorganischen Säuren mittels bipolarer Elektrodialyse ist jedoch bisher auf hochreine Ausgangslösungen beschränkt. Verunreinigungen durch höherwertige Kationen in der Ausgangslösung, wie z. B. Magnesium, Eisen, Aluminium oder Calcium, welche schwerlösliche Hydroxidverbindungen bilden, sind im Vorfeld durch aufwendige Aufreinigungsverfahren in den Bereich <1...5 ppm Kationen abzutrennen. Aufgrund der geringen Löslichkeit vieler Metallhydroxide treten bei unzureichender vorheriger Abtrennung Metallhydroxidausfällungen auf den Membranen auf (Membranscaling), welche die eingesetzten Membranen dauerhaft schädigen. Eisen(III)hydroxid nimmt mit einer Löslichkeit von 0,000021 mg/L bei 20 °C eine Sonderstellung ein und muss daher bis in den ppb-Bereich abgetrennt werden (Bailly M. Desalination 2002, 144, 157).

In US 2011/0203929 A1 und WO 2013/159194 A1 werden bipolare Elektrodialyseprozesse zur Salzspaltung von lithiumsulfathaltiger Lösung beschrieben. Die Vorreinigungen erfolgen hierbei mittels Fällung von Metallhydroxiden durch pH-Wert-Anhebung und anschließender Neutralisation (US 2011/0203929 A1) oder in WO 2013/159194 A1 mehrstufig durch Hydroxidfällung, Zugabe von Soda zur Fällung von Metallcarbonaten und Ionenaustauscherverfahren. Die ökonomisch aufwendigen Verfahren führen häufig zu einer negativen wirtschaftlichen Bilanz des Gesamtverfahrens und somit zur Verhinderung der technischen Umsetzung.

In React. Func. Polym. 1999, 39, 91-97 wird die elektrodialytische Herstellung von Phosphorsäure und Natriumhydroxid beschrieben.

Eine Vielzahl anderer wirtschaftlich hochinteressanter, elektrodialytischer Salzspaltungsprozesse, wie z. B. die bipolare elektrodialytische Umsetzung von Calciumphosphatsalzen zu Phosphorsäure, welche einen Wertstoff mit hoher Nachfrage darstellt und überwiegend bei der Herstellung von Düngern eingesetzt wird, und Calciumhydroxid (Löslichkeit: 1,6...1,7 g/L bei 20 °C) ist aus den beschriebenen Gründen mitdem derzeitigen Stand der Technik nicht umsetzbar.

Bipolare elektrodialytische Elektrolysevorrichtungen werden zudem in EP 2 465 600 A2 und Ind. Eng. Chem. Res. 2013, 52, 15896-15904 beschrieben.

Eine verfahrenstechnische Umsetzung mittels einer kontinuierlichen Filtration zur Abtrennung des gebildeten Calciumhydroxids ist aufgrund der hohen Calciumausgangsgehalte (> 20 g/L) nicht möglich. Membranscaling durch Calciumhydroxid ist bei diesem Prozess nicht zu vermeiden.

Der vorliegenden Erfindung liegt die Aufgabe zugrunde, ein Verfahren zur elektrodialytischen Herstellung von Phosphorsäure und Calciumhydroxid aus Claciumphosphatsalzen und eine Vorrichtung zur Herstellung von Phosphorsäure und Calciumhydroxid aus Claciumphosphatsalzen bereitzustellen.

Die Aufgabe wird gelöst durch ein Verfahren zur elektrodialytischen Herstellung von Phosphorsäure und Calciumhydroxid bei dem ein verunreinigtes wässriges Diluat, enthaltend mindestens ein gelöstes Calciumphosphatsalz, und eine wässrige Salzlösung, enthaltend Natriumchlorid, durch eine 5-Kammer-Elektrodialysezelle geleitet werden, wobei Calciumphosphatsalz und Natriumchlorid mittels Transport ionischer Komponenten über lonenaustauschmembranen unter Triebkraft eines elektrischen Feldes in ein calciumchloridhaltiges wässriges Konzentrat, eine wässrige Phosphorsäure und Natronlauge getrennt werden, wobei das Diluat, die Salzlösung, das Konzentrat, die Phosphorsäure und die Base in fünf Prozessströmen über ein Membranstack mit fünf durch lonentauschermembranen getrennten durchströmbaren Räumen und einer bipolaren Membran im kontinuierlichen Kreislauf geführt werden, wobei durch Mischen von Natronlauge und Konzentrat Calciumhydroxid gefällt wird.

Das Verfahren zur elektrodialytischen Herstellung von Phosphorsäure und Calciumhydroxid wird so geführt, dass bei dem ein verunreinigtes wässriges Diluat, enthaltend mindestens ein gelöstes Calciumphosphatsalz, durch eine 5-Kammer-Elektrodialysezelle in ein calciumsalzhaltiges wässriges Konzentrat, eine wässrige Phosphorsäure und eine wässrige Base getrennt wird, wobei ein zusätzlicher Salzkreislauf, enthaltend mindestens ein anorganisches Salz und ein Elektrolyt eingesetzt wird und wobei Diluat, der zusätzliche Salzkreislauf, Konzentrat, Phosphorsäure und Base in fünf unabhängigen Prozessströmen im kontinuierlichen Kreislauf geführt werden.

Elektrodialytische Herstellung, auch Elektrodialyse genannt, bezeichnen erfindungsgemäß eine dem Fachmann bekannte Methode zur Entfernung ionischer Komponenten aus wässrigen Lösungen durch deren Transport über Ionenaustauschermembranen, die sich in einer Elektrodialysezelle, auch Membranstack genannt, befinden, unter der Triebkraft eines elektrischen Feldes.

Verunreinigtes wässriges Diluat bezeichnet im Sinne der Erfindung eine Lösung auf Basis von Wasser, die mindestens ein gelöstes Calciumphosphatsalz enthält.

Bevorzugt ist das Calciumphosphatsalz Calciumdihydrogenphosphat (Ca(H₂PO₄)₂, DCP). Des Weiteren kann die Lösung Verunreinigungen in Form von Fremdionen wie beispielsweise Magnesium-, Eisen-, Aluminium-, Mangan- und/oder Calciumionen in einer und/oder unterschiedlicher Oxidationsstufe aufweisen sowie den beispielshaften Gegenionen (Anion) wie Chlorid, Sulfat, Nitrat und/oder Phosphat. Bevorzugt liegen im wässrigen Diluat Eisen(III), Aluminium(III), Magnesium(II), Mangan(II) und/oder Eisen(II) vor.

Vorteilhaft entfallen aufwendige Vorreinigungsschritte, da das erfindungsgemäße Verfahren auch hohe Gehalte (bis in den g/l-Bereich) von schwerlöslichen metallhydroxidbildenden Begleitkomponenten toleriert.

Bevorzugt beträgt der Calciumphosphatsalzgehalt im wässrigen Diluat 0,5 bis 500 g/l, besonders bevorzugt 5 bis 200 g/l, ganz besonders bevorzugt 50 bis 100 g/l.

Das Calciumphosphatsalz liegt bevorzugt vollständig gelöst im Diluat vor. Der maximale Gehalt an Calciumphosphatsalz im wässrigen Diluat ist durch dessen Löslichkeit begrenzt. Dem Fachmann sind die Löslichkeiten verschiedener Salze in Abhängigkeit vom pH-Wert bekannt, wie beispielsweise von Calciumdihydrogenphosphat mit 102 g/l bei 20°C und pH 1. (K. Kuroda, M. Okido, Bioinorganic Chemistry and Applications 2012, 2012, 1-7.)

Erfindungsgemäß werden das verunreinigte, wässrige Diluat, enthaltend mindestens ein gelöstes Calciumphosphatsalz und eine wässrige Salzlösung, enthaltend mindestens ein anorganisches Salz durch eine 5-Kammer-Elektrolysezelle geleitet.

Die wässrige Salzlösung enthält mindestens ein anorganisches Salz. Diese Lösung wird in einem Salzkreislauf geführt.

Weiterhin bevorzugt ist das mindestens eine anorganische Salz in der wässrigen Salzlösung Natriumchlorid.

In einer bevorzugten Ausgestaltung der Erfindung wird eine CalciumdihydrogenphosphatLösung als Diluat und eine wässrige Lösung von Natriumchlorid als Salzlösung eingesetzt.

5-Kammer-Elektrodialysezelle bezeichnet erfindungsgemäß einen Aufbau zur Elektrodialyse über den im Dialyseprozess fünf Prozessströme realisiert werden können. Bevorzugt werden die fünf Prozessströme über einen Membranstack ermöglicht. Zusätzlich können mehrere dieser Membranstacks parallel geschalten sein.

Erfindungsgemäß werden Calciumphosphatsalz und anorganisches Salz mittels Transport ionischer Komponenten über lonenaustauschmembranen unter Triebkraft eines elektrischen Feldes aufgetrennt.

Während des erfindungsgemäßen Verfahrens werden Phosphorsäure, eine Base und ein Calciumsalz in Form eines Konzentrates gebildet. Das Calciumsalz in Form eines Konzentrates wird auch als calciumhaltiges, wässriges Konzentrat bezeichnet.

Calciumhaltiges wässriges Konzentrat bezeichnet erfindungsgemäß die wässrige Lösung, die beim Verfahren entsteht. Dabei handelt es sich um ein Konzentrat, welches ein Calciumsalz in gelöster Form enthält. Die Art des Anions richtet sich nach der Art des eingesetzten zusätzlichen anorganischen Salzes im Salzkreislauf. Ist dieser beispielsweise Natriumchlorid, entsteht im erfindungsgemäßen Verfahren Calciumchlorid. Bevorzugt ist das Calciumsalz Calciumchlorid.

Base bezeichnet im Sinne der Erfindung eine anorganische Base, die als Nebenprodukt bei der Elektrodialyse entsteht. Welche Base gebildet wird, hängt von der Art des eingesetzten zusätzlichen anorganischen Salzes im Salzkreislauf (bzw. dessen enthaltenen Kationen) ab. Ist das zusätzliche Salz beispielsweise Natriumchlorid, so wird entsprechend Natronlauge (NaOH) gebildet.

Der Salzkreislauf bezeichnet im Sinne der Erfindung eine wässrige Lösung, enthaltend mindestens ein anorganisches Salz, die im kontinuierlichen Kreislauf geführt wird.

Das erfindungsgemäße Verfahren wird in einer 5-Kammer-Elektrodialysezelle durchgeführt, durch die fünf Prozessströme geführt werden. Die fünf Prozessströme sind durch lonenaustauschermembranen voneinander getrennt.

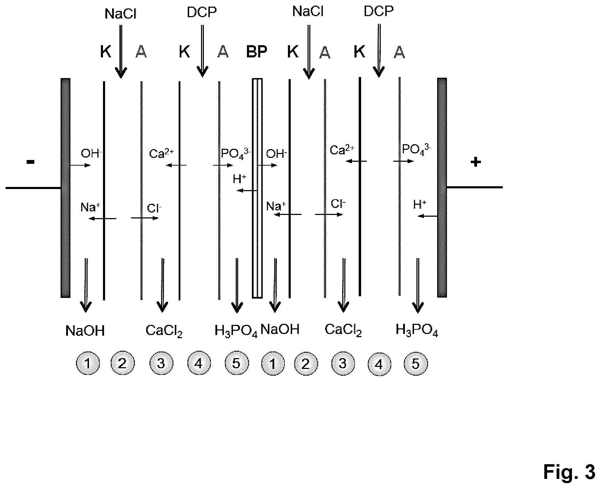

In Figur 3 ist der prinzipielle Ablauf des Verfahrens dargestellt. Sie zeigt zwei hintereinander geschaltete Elektrodialysekreisläufe.

Prinzipiell ist eine 5-Kammer-Elektrodialysezelle aufgebaut aus:
- Kathode, die von einem Elektrolyten umgeben ist,
- fünf durch lonenaustauschmembranen getrennten durchströmbaren Räumen
- Anode, die ebenfalls von einem Elektrolyten umgeben ist,
wobei sich die fünf durchströmbaren Räume zwischen Anode und Kathode befinden und wobei Anoden- und Kathodenraum durch lonenaustauschmembranen von dem jeweils angrenzenden durchströmbaren Raum getrennt sind.

Der Kathodenraum, enthaltend einen Elektrolyten, grenzt, getrennt durch eine lonenaustauschermembran an Strom 1.

In Strom 1 ist zunächst Wasser vorgelegt. Durch eine Kationenaustauschermembran (K) ist er von Strom 2 getrennt. In Strom 2 wird die wässrige Salzlösung vorgelegt. Diese ist durch eine Anionenaustauschermembran (A) von Strom 3 getrennt. In Strom 3 wird zunächst auch Wasser vorgelegt. Dies ist durch eine Kationenaustauschermembran (K) von Strom 4 getrennt. In Strom 4 wird das Diluat vorgelegt. Dies ist durch eine Anionenaustauschermembran (A) von Strom 5 getrennt, welcher wiederum zunächst nur Wasser führt. Strom 5 grenzt über eine bipdare Membran (BP) wieder an einen Strom 1. Diese Anordnung ist als Membranpaar definiert und lässt sich beliebig oft in einer Elektrodialysezelle hintereinander schalten. Abschliessend grenzt der Anodenraum, enthaltend einen Elektrolyten, getrennt durch ehe lonenaustauschermembran an den letzten Strom 5.

Mit dem Anlegen eines elektrischen Feldes werden das Calciumphosphatsalz im Diluat und das anorganische Salz in der Salzlösung mittels Transport ihrer ionischen Komponenten durch die lonenaustauschermembranen aufgetrennt.

Die Kationen des anorganischen Salzes in Strom 2 migrieren dabei durch die Kationenaustauschermembran in Richtung Kathode in Strom 1 hinein und reagieren dort mit den Hydroxidionen des Wassers zu der Base. Die Anionen des anorganischen Salzes aus Strom 2 migrieren durch die Anionenaustauschermembran in Richtung Anode in Strom 3 hinein.

Das Calciumphosphatsalz des Diluats in Strom 4 wird in Calcium-Kationen und Phosphatanionen aufgetrennt. Die Calcium-Kationen migrieren durch die Kationenaustauschermembran in Strom 3 hinein und reagieren dort mit den Anionen des anorganischen Salzes zum Calciumsalz.

Die Phosphatanionen migrieren hingegen durch die Anionenaustauschermembran in Strom 5 hinein, und reagieren dort mit den Protonen des Wassers zu Phosphorsäure.

Somit ergibt sich dass folgende Verbindungen in den einzelnen Strömen geführt werden:
Strom 1: Base (wird angereichert)
Strom 2: anorganisches Salz (Salzlösung - wird abgereichert)
Strom 3: Calciumsalz (wässriges Konzentrat-wird angereichert)
Strom 4: Calciumphosphatsalz (Diluat - wird abgereichert)
Strom 5: Phosphorsäure. (wird angereichert).

Bevorzugt ist der Elektrolyt eine wässrige Elektrolytlösung.

Bevorzugt umspült eine wässrige Elektrolytlösung, enthaltend mindestens einen anorganischen Elektrolyten, mindestens eine Elektrode, ausgewählt aus Anode und Kathode. Bevorzugt ist der mindestens eine anorganische Elektrolyt ausgewählt aus Phosphorsäure, Salpetersäure und Schwefelsäure und/oder den Salzen der Säure, Phosphatsalzen, Sulfatsalzen und Nitratsalzen, ganz besonders bevorzugt ausgewählt aus Natirumsulfat, Natriumphosphat und Natriumnitrat. Erfindungsgemäß werden Diluat, Salzlösung, Konzentrat, Phosphorsäure und Base in der 5-Kammer-Elektrodialysezelle in fünf Prozessströmen im kontinuierlichen Kreislauf geführt.

Sowohl Diluat als auch Salzlösung, Konzentrat, Phosphorsäure und Base werden jeweils in einem Prozessstrom im kontinuierlichen Kreislauf geführt. Die die einzelnen Prozessströme sind dabei durch Membranen räumlich voneinander getrennt. Je nach Beschaffenheit der Membran ist jedoch die Migration von Ionen von einem Strom in einen anderen möglich.

Jeder der 5 Prozessströme wird in einem kontinuierlichen Kreislauf geführt.

Kontinuierlicher Kreislauf bezeichnet im Sinne der Erfindung, dass die Prozessströme für einen begrenzten Zeitraum ohne Unterbrechung den Kreislauf durchströmen.

5-Kammer-Elektrodialysezelle bezeichnet erfindungsgemäß einen Aufbau zur Elektrodialyse über den im Dialyseprozess fünf Prozessströme realisiert werden können. Bevorzugt werden die fünf Prozessströme über einen Membranstack ermöglicht. Zusätzlich können mehrere dieser Membranstacks parallel geschalten sein.

Während des erfindungsgemäßen Verfahrens werden Phosphorsäure, eine Base und ein Calciumsalz in Form eines Konzentrates gebildet.

In einer bevorzugten Ausgestaltung der Erfindung werden Calciumdihydrogenphosphat als Diluat und eine wässrige Lösung von Natriumchlorid als Salzlösung eingesetzt.

Calciumhydrogenphosphat fällt im Tonnenmaßstab bei der Fällung von Phosphorverbindungen aus Abwässern mit Kalkmilch (Ca(OH)₂) als Abfallstoff an. Die stoffliche Nutzung als Dünger ist aufgrund der geringen Löslichkeit in Wasser (0,1 g/L) und damit einhergehender mangelnder Pflanzenverfügbarkeit nicht gegeben. Durch 1 bis 2-fache stöchiometrische Zugabe von Phosphorsäure wird Calciumhydrogenphosphat in Calciumdihydrogenphosphatlösung überführt und kann dem erfindungsgemäßen Elektrodialyseprozess zugeführt werden. Durch die hohen Phosphorsäureausbeuten ist das Verfahren wirtschaftlich, auch wenn zur Gewinnung des Ausgangsstoffes Calciumdihydrogenphosphat bereits Phosphorsäure eingesetzt wird.

Dabei entstehen durch lonenaustausch eine wässrige Natriumhydroxidlösung als Base, Phosphorsäure und Calciumchlorid als Konzentrat, in Form einer wässrigen Lösung.

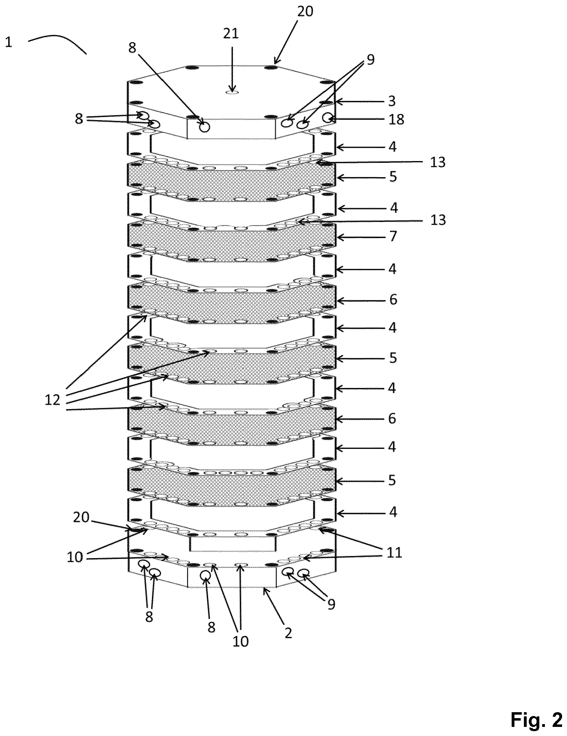

Für das erfindungsgemäße Verfahren wird ein Membranstack, aufweisend mindestens folgende Komponenten (von links nach rechts) verwendet: Anode, Platzhalter ohne Ein- und Austrittsöffnungen, Kationenaustauschermembran, Platzhalter, Anionen-austauschermembran, Platzhalter, Kationenaustauschermembran, Platzhalter, Anionenaustauschermembran, Platzhalter, bipolare Membran, Platzhalter ohne Ein- und Austrittsöffnungen und Kathode (Figur 2). Zur Steigerung der Effektivität des Verfahrens kann sich die genannte Abfolge der Platzhalter und Membranen (Platzhalter, Kationenaustauschermembran, Platzhalter, Anionenaustauschermembran, Platzhalter, Kationenaustauschermembran, Platzhalter, Anionenaustauschermembran, Platzhalter, bipolare Membran,) zwischen Anode und Kathode beliebig oft wiederholen. Bevorzugt wiederholt sich die Abfolge der Membranen einmal.

Aus der beim erfindungsgemäßen Verfahren entstandenen Natriumhydroxidlösung und dem Calciumchlorid kann durch Mischen beider wässriger Lösungen Calciumhydroxid unter Bildung von Natriumchlorid gefällt werden. Dem Fachmann ist bekannt in welchem Verhältnis die Lösungen zu Mischen sind und wie das feste Calciumhydroxid aus der wässrigen Lösung abgetrennt werden kann.

Das Calciumhydroxid kann beispielsweise zur erneuten Calciumhydrogenphosphatfällung aus phosphathaltigen Abwässern eingesetzt werden. Die entstandene Natriumchloridlösung wird vorteilhafterweise im Prozesskreislauf eines erfindungsgemäßen Verfahrens eingesetzt. Eine Konzentrierung und Vermarktung der Calciumchloridlösung und Natronlauge ist ebenfalls möglich. Die elektrodialytisch erhaltene Phosphorsäure hat eine Konzentration von 1 bis 5 M, unter Berücksichtigung einer hohen Stromausbeute vorteilhafterweise 1 bis 2,5 M und kann beispielsweise zum chemischen Aufschluss von Calciumphosphat (Ca₃(PO₄)₂), Hydroxylapatit (Ca₅[OH(PO₄)₃]) und Klärschlamm eingesetzt oder durch klassische Eindampfungsverfahren konzentriert und beispielsweise als Ausgangsstoff zur Herstellung von phosphathaltigem Dünger verwendet werden.

Vorteilhaft wird durch das erfindungsgemäße Verfahren die Bildung von Calciumhydroxid während der Herstellung der Phosphorsäure verhindert, wodurch ein Membranscaling durch das schwer lösliche Calciumhydroxid (1,6 bis 1,7 g/L bei 20 °C) vermieden wird.

Bevorzugt werden Lösungen zur elektrodialytischen Umsetzung mit einer Temperatur von 1 bis 90°C, besonders bevorzugt von 10 bis 50°C, ganz besonders bevorzugt von 20 bis 35°C eingesetzt.

Die elektrochemischen Prozessparameter richten sich prinzipiell nach der Art der verwendeten Membranen und liegen für die Gleichstromversorgung je Membranstapeleinheit bevorzugt bei 1,5 bis 5,0 V, besonders bevorzugt bei 2,5 bis 4,0 V. Die Stromdichten liegen bevorzugt bei 5 bis 25 mA/cm².

Während der Elektrodialyse ist insbesondere zu Beginn des Prozesses im Diluatkreislauf darauf zu achten, dass der pH-Wert so eingestellt ist, dass die Löslichkeitsgrenze des Calciumdihydrogenphosphats über dem tatsächlich in der Lösung vorliegendem Calciumdihydrogenphosphatgehalt liegt. Dieser kann bei Bedarf durch Zugabe von Phosphorsäure eingestellt werden.

Die Erfindung betrifft zudem eine Vorrichtung zur elektrodialytischen Herstellung von Phosphorsäure und Calciumhydroxid gemäß der Ansprüche.

Zur Erfindung gehört auch eine Vorrichtung zur elektrodialytischen Herstellung von Phosphorsäure und Calciumhydroxid umfassend die Komponenten
a) eine Membranstapeleinheit (1), aufweisend die Komponenten eine Endplatte (2), aufweisend eine Anode, eine Endplatte (3), aufweisend eine Kathode, sieben Platzhalter (4), drei Kationenaustauschermembranen (5), zwei Anionenaustauschermembranen (6) und eine bipolare Membran (7), wobei die Endplatten 5 Zulauföffnungen (8), 5 Ablauföffnungen (9), 10 Zulaufaustrittsöffnungen (10) und 10 Ablaufaustrittsöffnungen (11) aufweisen und wobei die Zulauföffnungen (8) mit den Zulaufaustrittsöffnungen (10) und die Ablauföffnungen (9) mit den Ablaufaustrittsöffnungen (11) über kommunizierende Kanäle verbunden sind und wobei die Platzhalter, die Kationenaustauschermembranen, die Anionenaustauschermembranen und die bipolare Membran jeweils 20 Durchtrittsöffnungen aufweisen und wobei 10 der Durchtrittsöffnungen als Zulaufdurchtrittsöffnungen (12) und 10 der Durchtrittsöffnungen als Ablaufdurchtrittsöffnungen (13) ausgebildet sind und wobei die Zulaufaustrittsöffnungen (10) und die Zulaufdurchtrittsöffnungen (12) deckungsgleich übereinander liegen und wobei die Ablaufaustrittsöffnungen (11) und die Ablaufdurchtrittsöffnungen (13) deckungsgleich übereinander liegen,
b) ein Vorratsbehälter (14) für ein verunreinigtes wässriges Diluat,
c) einen Behälter (15) für eine wässrige Base,
d) einen Sammelbehälter (16) für ein Konzentrat,
e) ein Gefäß (17) für eine zusätzliche Salzlösung,
f) ein Behältnis (18) für eine wässrige Phosphorsäure,
g) einen Tank (22) für eine Elektrolytlösung,
wobei der Vorratsbehälter, der Behälter, der Sammelbehälter, das Gefäß, das Behältnis und der Tank über kommunizierende Leitungen mit der Membranstapeleinheit verbunden sind und die Membranstapeleinheit über rückläufige kommunizierende Leitungen mit dem Vorratsbehälter, dem Behälter, dem Sammelbehälter, dem Gefäß, dem Behältnis und dem Tank verbunden sind.

Membranstapeleinheit (Membranstack), auch Elektrodialysezelle, bezeichnet im Sinne der Erfindung ein Bauteil, mit dem durch gezielte Anordnung verschiedener Ionenaustauschermembranen, zu denen Kationenaustauschermembranen, Anionenaustauschermembranen und bipolare Membranen zählen, und Platzhalter zwischen zwei Endplatten verschiedene elektrodialytische Prozesse durchgeführt werden können.

Dem Fachmann sind die verschiedenen Arten und Funktionsweisen der Membranen bekannt.

Endplatten sind erfindungsgemäß die Endstücke einer MembranstapeIeinheit wobei eine erste Endplatte eine Anode und eine zweite Endplatte eine Kathode beinhaltet. Verschiedene geeignete Anoden und Kathoden sind dem Fachmann bekannt und werden im Folgenden auch gemeinsam als Elektroden bezeichnet. Als Elektrodenmaterialien werden gängige Werkstoffe, wie beispielsweise Raney-Nickel oder platiniertes Titan, eingesetzt. Die Form der Elektroden ist frei anpassbar, bevorzugt wird eine quadratische oder achteckige Ausführungsform.

Bevorzugt weist jede Endplatte auf der Innenseite eine Elektrodenaussparung auf, in der entweder eine Anode oder eine Kathode eingebracht werden kann. Innenseite bezeichnet erfindungsgemäß die Seite der Endplatte, die im zusammengesetzten Zustand der Membranstapeleinheit den Platzhaltern und Ionenaustauschermembranen zugewandt ist, während die der genannten Komponenten abgewandte Seite die Außenseite der Endplatte ist. Bevorzugt liegt die Elektrodenaussparung mittig auf der größten Fläche der Endplatte und weist die Form und Tiefe der eingesetzten Elektrode auf, besonders bevorzugt ist die Elektrodenaussparung quadratisch oder achteckig. Bevorzugt befindet sich mittig in der Elektrodenaussparung mindestens ein bevorzugt kreisförmiger Elektrodenanschluss, an dem ein elektrisches Kabel zum Betreiben der Elektrode angebracht werden kann. Die genau Lage, Form und Größe des Eletrodenanschlusses richtet sich nach der Bauform der verwendeten Elektrode. Bevorzugt besteht der Elektrodenanschluss aus einem elektrisch leitfähigen Material und ist als Hülse oder Schraube ausgebildet.

Bevorzugt weist die Elektrodenaussparung mindestens eine, bevorzugt kreisförmige Elektrodenspülaussparung auf. Ist die Elektrodenaussparung quadratisch ausgebildet, so befinden sich die Elektrodenspülaussparung bevorzugt gleichmäßig verteilt an den vier Seiten der Elektrodenaussparung. Bevorzugt weist die Elektrodenaussparung 4 bis 10, besonders bevorzugt 6 Elektrodenspülaussparungen an jeder der vier Seiten der Elektrodenaussparung auf. Die Elektrodenspülaussparungen sind Löcher, die so durch die Endplatte verlaufen, dass sie in mindestens einem Zulauf Elektrodenspülaussparungen münden, der sich bevorzugt an den Seitenwänden der Endplatte befindet.

In einer bevorzugten Ausgestaltung der Erfindung weisen die Endplatten, die Platzhalter und/oder die lonenaustauschermembranen die Form eines regelmäßigen Achtecks auf. Regelmäßiges Achteck bezeichnet im Sinne der Erfindung ein Vieleck mit acht gleich langen Seiten und acht gleich großen Innenwinkeln, wobei die gleich langen Seiten der Platzhalter und der lonenaustauschermembranen jeweils bevorzugt 50 bis 800 mm, besonders bevorzugt 100 bis 300 mm, ganz besonders bevorzugt 150 bis 250 mm und die gleich langen Seiten der Endplatten jeweils bevorzugt 60 bis 810 mm, besonders bevorzugt 110 bis 310 mm, ganz besonders bevorzugt 160 bis 260 mm lang sind.

Die Ecken des Achteckes können im Uhrzeigersinn mit den Ziffern A bis H bezeichnet werden. Die acht gleich langen Seiten werden dann jeweils mit deren abschließenden Ecken bezeichnet. Beispielsweise erhält die Seite, die zwischen den Eckpunkten C und D liegt die Bezeichnung CD.

Bevorzugt hat die Endplatte eine Höhe von 30 bis 1000 mm, besonders bevorzugt von 50 bis 300 mm, ganz besonders bevorzugt von 100 bis 200 mm. Ist die Endplatte achteckig ausgestaltet, so ergeben sich durch diese Form acht gleich große rechteckige Seitenwände, deren Fläche sich aus der Höhe der Endplatte mal der Länge einer der acht gleichlangen Seiten des regelmäßigen Achtecks ergibt.

Bevorzugt haben die Platzhalter eine Höhe von 0,05 bis 15,0 mm, besonders bevorzugt von 0,2 bis 2,0 mm, ganz besonders bevorzugt von 0,5 bis 1,0 mm.

Bevorzugt haben die lonenaustauschermembranen eine Höhe von 0,03 bis 2,0 mm, besonders bevorzugt von 0,08 bis 0,3 mm, ganz besonders bevorzugt von 0,1 bis 0,2 mm.

Vorteilhaft können durch die achteckige Form die Zulaufaustrittsöffnungen und die Ablaufaustrittsöffnungen der Endplatten und die Durchtrittsöffnungen der Platzhalter und der lonenaustauschermembranen gleichmäßig verteilt an den Seiten der jeweiligen Komponenten angeordnet werden.

Prinzipiell können die Endplatte, die lonenaustauschermembranen und die Platzhalter auch mehr als die benötigte Anzahl an den jeweiligen Öffnungen aufweisen. Diese würden dann im erfindungsgemäßen Verfahren ungenutzt bleiben.

Prinzipiell können die Endplatten, Platzhalter und lonenaustauschermembranen jede Form aufweisen, mit dem der erfindungsgemäße Aufbau und damit mehr als vier Prozesskreisläufe realisierbar sind. Es ist beispielsweise möglich die Komponenten kreisförmig zu gestalten. In einer bevorzugten Ausgestaltung der Erfindung weisen alle Komponenten die gleiche Form auf.

Bevorzugt weisen die Endplatten, die Platzhalter und die lonenaustauschermembranen mindestens eine Endplattengewindestangenaussparung (20) auf und liegen deckungsgleich übereinander.

Vorteilhaft können durch die Endplattengewindestangenaussparung (20) Gewindestangen geführt werden, die von der Außenseite der Endplatte mit Muttern versehen werden können, so dass die Membranstapeleinheit fest zusammengehalten wird.

In einer besonderen Ausgestaltung der Erfindung ist die Endplattengewindestangenaussparung (20) mit einem Gewinde versehen, so dass durch diese vorteilhaft eine Gewindestange geführt werden kann, die die einzelnen Komponenten der Membranstapeleinheit zusammen hält.

In einer bevorzugten Ausgestaltung der Erfindung, in der die einzelnen Komponenten des Membranstacks achteckig ausgebildet sind, weisen die Komponenten in jede der acht Ecken eine Endplattengewindestangenaussparung (20) auf.

Bevorzugt befinden sich die Zulauföffnungen (8) und Ablauföffnungen (9) an den bevorzugt acht gleich großen rechteckigen Seitenwänden der Endplatten und die Zulaufaustrittsöffnungen (10) und Ablaufaustrittsöffnungen (11) auf einer der Achteckflächen.

Vorteilhaft sind die Zulauföffnungen (8) und Ablauföffnungen (9) gleichmäßig auf den Seitenwänden des Endstückes verteilt. Bevorzugt liegen die Zulauföffnungen (8) jeweils auf den Seitenwänden zwischen den Ecken AB, HA und CD und die Ablauföffnungen (9) auf den Seitenwänden zwischen den Ecken EF, DE und HG.

Bevorzugt weisen die Endplatten 5 Zulauföffnungen (8) und 5 Ablauföffnungen (9) auf, so dass sich jeweils auf zwei der acht gleich großen rechteckigen Seitenwände zwei Zulauföffnungen (8) und auf einer der acht gleich großen rechteckigen Seitenwände eine Zulauföffnung (8) und auf zwei der acht gleich großen rechteckigen Seitenwände zwei Ablauföffnungen (9) und auf einer der acht gleich großen rechteckigen Seitenwände eine Ablauföffnung (9) befinden.

Die Zulauföffnungen (8) und Ablauföffnungen (9) ziehen sich in einem Kanal durch die Endplatte, wobei die Zulauföffnungen (8) in den Zulaufaustrittsöffnungen (10) und die Ablauföffnungen (9) in den Ablaufaustrittsöffnungen (11) münden. Die Zulaufaustrittsöffnungen (10) und die Ablaufaustrittsöffnungen (11) befinden sich bevorzugt auf der größten Fläche, der bevorzugt Achteckfläche, der Endplatten. Vorteilhaft sind die Zulaufaustrittsöffnungen (10) und die Ablaufaustrittsöffnungen (11) auf der Achteckfläche gleichmäßig verteit und liegen bevorzugt am Rand.

Bevorzugt liegen die Zulaufaustrittsöffnungen (10) und die Ablaufaustrittsöffnungen (11) zwischen den gleichen Ecken des Achtecks wie die dazugehörigen Zulauföffnungen (8) und Ablauföffnungen (9).

Bevorzugt teilen sich die Kanäle der 5 Zulauföffnungen (8) in je 2 Teilkanäle, die der Anzahl der Zulaufaustrittsöffnungen (10) entspricht.

Bevorzugt teilen sich die Kanäle der 5 Ablauföffnungen (2) in je 2 Teilkanäle, die der Anzahl der Ablaufaustrittsöffnungen (11) entspricht.

Vorteilhaft können so mehr fünf verschiedene, separierte Prozesskreisläufe mit der Membranstapeleinheit realisiert werden. Damit ermöglicht der erfindungsgemäße Membranstack weite elektrodialytische Anwendungen.

Bevorzugt bestehen die Endplatten aus einem chemisch gegenüber Basen und Säuren inerten und mechanisch stabilen Material, ausgewählt aus Polyvinylchlorid, Polypropylen, Polyethylen, Polytetrafluorethylen, Polyphenylensulfid, Polyetheretherketon und hochwertigem Edelstahl. Hochwertiger Edelstahl bezeichnet im Sinne der Erfindung mindestens V4A-Stahl oder Stahl höherer Güte. Dem Fachmann sind die verschiedenen Stähle und deren Eigenschaften bekannt.

Bevorzugt sind die Öffnungen der Platzhalter und der lonenaustauschermembranen am äußeren Rand der größten, bevorzugt achteckigen, Fläche angeordnet.

Vorteilhaft sind die Öffnungen als Löcher ausgebildet, deren Durchmesser bevorzugt 1 bis 50 mm, besonders bevorzugt 4 bis 20 mm, ganz besonders bevorzugt 6 bis 12 mm beträgt.

Bevorzugt weisen die Zulauföffnungen (8) und die Ablauföffnungen (9) Anschlüsse auf, an die beispielsweise Schläuche montiert werden können, um so einen Prozessstrom in und aus den Membranstack zu gewährleisten. Dem Fachmann sind verschiedene Schlauchanschlüsse bekannt.

Bevorzugt weist jeder Platzhalter in der Mitte seiner größten, bevorzugt achteckigen, Fläche eine zusätzliche Öffnung auf, die bevorzugt die Form des Platzhalters aufweist und besonders bevorzugt achteckig ist.

Bevorzugt ist über die Fläche der zusätzlichen Öffnung ein gitterartiges, engmaschiges Netz gespannt. Bevorzugt besteht dieses Netz aus einem inerten Material, ausgewählt aus Polyvinylchlorid, Polypropylen, Polyethylen, Polytetrafluorethylen, Polyphenylensulfid und Polyetheretherketon. Vorteilhaft werden dadurch die angrenzenden lonenaustauschermembranen stabilisiert und deren Durchbiegen wird verhindert.

Bevorzugt weist der Membranstack fünf Platzhalter auf, bei denen mindestens eine Zulaufdurchtrittsöffnung (12) und mindestens eine Ablaufdurchtrittsöffnung (13) so ausgebildet ist, dass er zu der zusätzlichen Öffnung in der Mitte des Platzhalters offen und mit dieser verbunden ist. Im Folgenden werden derart ausgebildete Zulaufdurchtrittsöffnung (12) und Ablaufdurchtrittsöffnung (13) als geöffnete Zulaufdurchtrittsöffnungen (12) und geöffnete Ablaufdurchtrittsöffnungen (13) bezeichnet. Vorteilhaft kann somit Prozessflüssigkeit aus der Zulaufdurchtrittsöffnung (12) über die offene Seite in die zusätzliche Öffnung fließen und diese wieder durch die ebenfalls zur zusätzlichen Öffnung des Platzhalters hin geöffnete Ablaufdurchtrittsöffnung (13) verlassen.

Diese Art der offenen Löcher hin zur zusätzlichen Öffnung in einem Platzhalter ist dem Fachmann aus dem Stand der Technik bekannt.

Bevorzugt liegen die geöffneten Zulaufdurchtrittsöffnungen (12) und die geöffneten Ablaufdurchtrittsöffnungen (13) auf jeweils gegenüberliegenden Seiten des Platzhalters, bei einer achteckigen Form des Platzhalters würde demnach die mindestens eine geöffneten Zulaufdurchtrittsöffnungen (12) beispielsweise an der Seite AB und die dazugehörige mindestens eine Ablaufdurchtrittsöffnungen (13) an der Seite EF liegen.

Vorteilhaft können durch diese Platzhaltergeometrie alle Prozesskreisläufe mit nur einem Typ von Platzhalter abgedeckt werden, da dieser durch Drehen und Spiegeln jeweils so in den Membranstack eingesetzt werden kann, dass alle Prozesskreisläufe realisierbar sind.

Bevorzugt bestehen die Platzhalter aus einem inerten Material, ausgewählt aus Polyvinylchlorid, Polypropylen, Polyvinylchlorid, Polypropylen, Polyethylen, Polytetrafluorethylen, Polyphenylensulfid, Polyethererthketon und Poly(organo)siloxane.

Bevorzugt weist die Membranstapeleinheit zwei Platzhalter auf, bei denen keine der Zulaufdurchtrittsöffnungen (12) und Ablaufdurchtrittsöffnungen (13) als geöffnete Zulaufdurchtrittsöffnungen (12) und geöffnete Ablaufdurchtrittsöffnungen (13) ausgebildet sind. Diese Platzhalter, die keine geöffneten Zulaufdurchtrittsöffnungen (12) und keine geöffneten Ablaufdurchtrittsöffnungen (13) enthalten, sind jeweils direkt nach der Endplatte angeordnet.

Dem Fachmann sind die nach einer Endplatte angeordneten Platzhalter, bzw. Spacer, auch als Endspacer bekannt.

Bevorzugt sind die lonenaustauschermembranen Membranen, die aus dem Stand der Technik bekannt sind.

Bevorzugt haben die verwendeten Anionen- und Kationenaustauschermembranen eine Dicke < 2 mm, eine Anion/Kation Festladungsdichte von 0,5 bis 5,0 meq/g, sowie einen elektrischen Widerstand < 10 Ω/cm.

Dem Fachmann ist des Weiteren bekannt, dass bipolare Membranen eine zweischichtige Verbindung von Anionenaustauschermembranen und Kationenaustauschermembranen sind. Bevorzugt haben diese Anionen- und Kationenaustauschermembranen jeweils eine Dicke < 2 mm, eine Anion/Kation Festladungsdichte von 0,5 bis 5,0 meq/g, sowie einen elektrischen Widerstand < 10 Ω/cm.

Dem Fachmann sind beispielsweise Anionenaustauschermembranen, wie beispielsweise Neosepta® AMX oder Neosepta® ACS, Tokuyama Corporation, Selemion AMV Asahi Glass, PC Acid 100 oder PC Acid 60 für einwertige Anionen, PCCell GmbH fumasep® FAB FuMA-Tech GmbH, Kationenaustauschermembranen, wie beispielsweise Neosepta® CMX oder Neosepta® CMS für einwertige Anionen, Tokuyama Corporation, Selemion CMV Asahi Glass, fumasep® FKB FuMA-Tech GmbH und bipolare Membranen, wie beispielsweise Neosepta® BP1 Tokuyama Corporation, fumasep® FBM FuMA-Tech GmbH, bekannt.

Dem Fachmann ist bekannt, dass er zur Steigerung der Effektivität eines elektrodialytischen Verfahrens mehrere Membranstapeleinheiten parallel schalten kann bzw. die Membranstapeleinheit, zwischen den Endplatten, so erweitern kann, dass innerhalb dieser der elektrodialytische Prozess mehrfach parallel abläuft.

Dem Fachmann sind verschiedene Arten von Vorratsbehältern, Behältern, Sammelbehältern, Gefäßen, Behältnissen und Tanks zum Aufbewahren von wässrigen Flüssigkeiten bzw. Lösungen bekannt. Wässrige Flüssigkeiten bzw. Lösungen bezeichnen erfindungsgemäß die das verunreinigte, wässrige Diluat, das Konzentrat, den zusätzlichen Elektrolyten und die wässrige Phosphorsäure. Vorteilhaft sind der Vorratsbehälter, der Behälter, der Sammelbehälter, das Gefäß, das Behältnis und der Tank inert gegenüber den wässrigen Flüssigkeiten bzw. Lösungen, so dass diese auch bei längerer Lagerung nicht verändert wird. Das Fassungsvermögen der sechs Gefäße wird der Fachmann entsprechend des Volumens der wässrigen Flüssigkeiten bzw. Lösungen auswählen.

Vorteilhaft sind der Vorratsbehälter, der Behälter, der Sammelbehälter, das Gefäß, das Behältnis und der Tank der Vorrichtung über Leitungen kommunizierend mit der Membranstapeleinheit (1) verbunden, wodurch es ermöglicht wird, die fünf Prozessströme (Diluat, Base, Säure, Konzentrat, Salzlösung) und den Elektrolyt vom Vorratsbehälter, dem Behälter, dem Sammelbehälter, dem Gefäß, dem Behältnis und dem Tank und jeweils zur Membranstapeleinheit und von der Membranstapeleinheit zurück zum Vorratsbehälter, dem Behälter, dem Sammelbehälter, dem Gefäß, dem Behältnis und dem Tank zu transportieren. Somit entstehen fünf voneinander getrennte Prozessströme, die in sich abgeschlossen kontinuierlich transportiert werden können.

Dem Fachmann sind verschiedene Einrichtungen zum Transport von wässrigen Flüssigkeiten bzw. Lösungen in kommunizierenden Leitungen bekannt. Beispielsweise können verschiedene Einrichtungen zum Fördern (19), wie beispielsweise (Förder-)pumpen, verwendet werden. Gängige, dem Fachmann bekannte Pumpen zum Transport von Flüssigkeiten durch Leitungssysteme sind beispielsweise Dosierpumpen, die unabhängig von den Druckverhältnissen vor und nach der Dosierpumpe definierte Volumina pro Umdrehung, Hub oder Zeit transportieren können. Zu den Dosierpumpen zählen beispielsweise Hubkolbenpumpen, Schlauchpumpen, Membranpumpen und Zahnradpumpen. Der Fachmann wird für jede Trennvorrichtung die geeignete Pumpe auswählen. Vorteilhaft kann durch die Wahl einer geeigneten Einheit zum Transport von wässrigen Flüssigkeiten bzw. Lösungen durch die Leitungen ein konstanter Volumenstrom und eine gewünschte Durchflussrate der ionenhaltigen Lösung eingestellt werden. Die Durchflussrate bezeichnet das Volumen an ionenhaltiger Lösung, welche sich in einer Zeitspanne durch einen Querschnitt bewegt.

Bevorzugt sind die Leitungen ausgewählt aus Glasrohren, Kunststoffschläuchen und/oder Metallschläuchen.

Vorteilhaft ist die Leitung inert gegenüber den wässrigen Flüssigkeiten bzw. Lösungen, so dass diese auch bei längerem Kontakt mit den wässrigen Flüssigkeiten bzw. Lösungen nicht verändert werden.

Dem Fachmann sind die verschiedenen Arten von Kunststoff- und Metallschläuchen bekannt. Gängige Schläuche sind beispielsweise PVC-Schläuche ohne Gewebe, PVC-Schläuchen mit Gewebe, Polyethylenschläuche, Polyamidschläuche, Polyurethanschläuche und Spiraldruck- und Saugschläuche aus beispielsweise Polyurethan, Polyamid, Polyvinylchlorid (PVC) oder Metall. Der Fachmann wird für die jeweilige Vorrichtung den passenden Schlauch auswählen.

### Ausführungsbeispiele

Anhand der aufgeführten Darstellungen und Ausführungsbeispiele soll die Erfindung näher erläutert werden ohne sie auf diese zu beschränken. Dabei zeigen
- **Fig. 1**: Allgemeiner Aufbau der Vorrichtung zur elektrodialytischen Herstellung von Phosphorsäure,
- **Fig. 2**: Schematische Darstellung der Komponentenanordnung in der Membranstapeleinheit (1) der Vorrichtung zur elektrodialytischen Herstellung von Phosphorsäure,
- **Fig. 3**: Schematische Darstellung der Komponentenanordnungen in der Membranstapeleinheit (1) einer 5-Kammer-Elektrodialyse zur Herstellung von Phosphorsäure und Calciumhydroxid mit zwei hintereinander geschalten 5-Kammer-Elektrodialyse-Kreisläufen.
- **Fig. 4**: einen achteckigen Platzhalter (4).

Figur 2 zeigt die relative Lage der einzelnen Komponenten einer erfindungsgemäßen Membranstapeleinheit (1) im Mindestaufbau für den erfindungsgemäßen elektrodialytischen Prozess mit 5 Prozessströmen. Der Membranstack (1) weist von unten nach oben gesehen folgende Komponenten auf: eine Endplatte mit einer Kathode (3), einen Platzhalter (4) mit nicht geöffneten Zulaufdurchtrittsöffnungen (12) und Ablaufdurchtrittsöffnungen (13), auch Endspacer genannt, eine Kationenaustauschermembran (5), einem Platzhalter (4) mit geöffneten Zulaufdurchtrittsöffnungen (12) und geöffneten Ablaufdurchtrittsöffnungen (13), einer Anionenaustauschermembran (6), einem Platzhalter (4) mit geöffneten Zulaufdurchtrittsöffnungen (12) und geöffneten Ablaufdurchtrittsöffnungen (13), einer Kationenaustauschermembran (5), einem Platzhalter (4) mit geöffneten Zulaufdurchtrittsöffnungen (12) und geöffneten Ablaufdurchtrittsöffnungen (13), einer Anionenaustauschermembran (6), einem Platzhalter (4) mit geöffneten Zulaufdurchtrittsöffnungen (12) und geöffneten Ablaufdurchtrittsöffnungen (13), einer bipolaren Membran, einem Platzhalter (4) mit geöffneten Zulaufdurchtrittsöffnungen (12) und geöffneten Ablaufdurchtrittsöffnungen (13), einer Kationenaustauschermembran (5), einen Platzhalter (4) mit nicht geöffneten Zulaufdurchtrittsöffnungen (12) und Ablaufdurchtrittsöffnungen (13), auch Endspacer genannt, eine Endplatte mit einer Anode (2) auf, wobei die einzelnen Platzhalter (4) mit geöffneten Zulaufdurchtrittsöffnungen (12) und geöffneten Ablaufdurchtrittsöffnungen (13) so in die Membranstapeleinheit eingebaut sind, dass die geöffneten Zulaufdurchtrittsöffnungen (12) und geöffneten Ablaufdurchtrittsöffnungen (13) nicht deckungsgleich zu den geöffneten Zulaufdurchtrittsöffnungen (12) und geöffneten Ablaufdurchtrittsöffnungen (13) des nächsten Platzhalters (4) liegen. Vorteilhaft können für eine solche Anordnung baugleiche Platzhalter verwendet werden, die durch Drehen oder Spiegeln so in die Membranstapeleinheit eingebaut werden können, dass die beschriebene Lage der geöffneten Zulaufdurchtrittsöffnungen (12) und geöffneten Ablaufdurchtrittsöffnungen (13) der einzelnen Platzhalter (4) möglich ist.
Über die Aussparungen für Endplattengewindestangen (20) können Gewindestangen in die Endplatten eingeschraubt und mit Muttern von außen (Außenseite der Endplatte) versehen werden. Dadurch werden alle Komponenten fest zusammengehalten. Sind die Komponenten durch die festgezogenen Gewindestangen zusammen gehalten, so wird eine Membranstapeleinheit erhalten.

Mit einer Membranstapeleinheit nach Figur 2 kann die elektrodialytische Herstellung von Phosphorsäure und Calciumchlorid aus Calciumdihydrogenphosphatlösungen und Natriumchloridlösung in einem 5-Kammer-Verfahren realisiert werden.

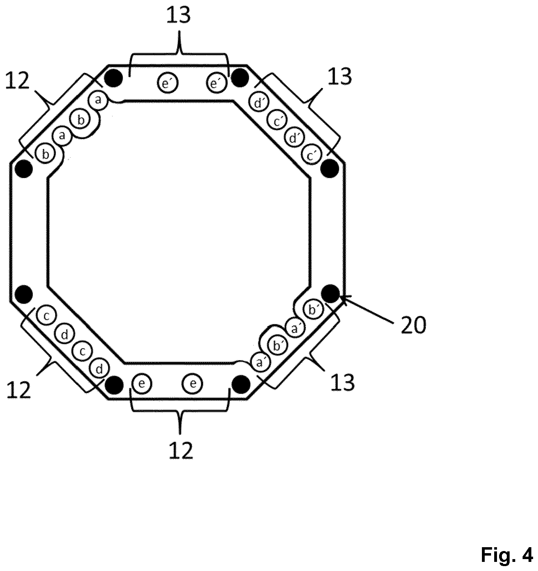

Dazu zirkuliert in der Endplatte (3) ein Elektrolyt (beispielsweise Natriumhydroxidlösung), welcher um die Kathode und im ersten Platzhalter (4), auch Endspacer genannt, zirkuliert. Zusätzlich wird ein erster Prozesskreislauf (beispielsweise eine Natriumchloridlösung) über eine Zulauföffnung (8) zu zwei Zulaufaustrittsöffnungen (10), weiter zu den beispielsweise die in Figur 4 mit a bezeichneten geöffneten Zulaufdurchtrittsöffnungen (12) des zweiten Platzhalters (4), transportiert. Dieser Prozessstrom fließt durch die zusätzliche Öffnung des zweiten Platzhalters, wo er abgereichert wird, zu den geöffneten Ablaufdurchtrittsöffnungen (13), die in Figur 4 mit a' bezeichnet sind, und anschließend durch alle weiteren sich in der Membranstapeleinheit befindlichen Platzhalter (4) und lonenaustauschermembranen hin zu der anderen Endplatte mit einer Anode (2), und tritt dort über die Ablaufaustrittsöffnungen (11) aus der Ablauföffnung (9) aus der Membranstapeleinheit aus.

Im Anschluss an die nachfolgende Anionenaustauschermembran (6) wird mit einem dritten Platzhalter (4) analog des zweiten Platzhalters ein weiterer Prozesskreislauf (eine Calciumchloridlösung), beispielsweise über die geöffneten Zulaufdurchtrittsöffnungen (12), in Figur 4 mit e bezeichnet, realisiert. Diese verlässt den Platzhalter über die in Figur 4 mit e' bezeichnete Ablaufdurchtrittsöffnungen (13), fließt weiter zur Endplatte und verlässt dort die Membranstapeleinheit (1) über eine Ablauföffnung (9).

Im Anschluss an die nachfolgende Kationenaustauschermembran (5) wird mit einem vierten Platzhalter (4) analog des zweiten und dritten Platzhalters ein weiterer Prozesskreislauf (eine Calciumdihydrogenphosphatlösung), beispielsweise über die geöffneten Zulaufdurchtrittsöffnungen (12), in Figur 4 mit c bezeichnet, realisiert. Diese verlässt den Platzhalter über die in Figur 4 mit c' bezeichnete Ablaufdurchtrittsöffnungen (13), fließt weiter zur Endplatte und verlässt dort die Membranstapeleinheit (1) über eine Ablauföffnung (9).

Im Anschluss an die nachfolgende Kationenaustauschermembran (5) wird mit einem fünften Platzhalter (4) analog des zweiten, dritten und vierten Platzhalters ein weiterer Prozesskreislauf (eine Phosphorsäurelösung), beispielsweise über die geöffneten Zulaufdurchtrittsöffnungen (12), in Figur 4 mit b bezeichnet, realisiert. Diese verlässt den Platzhalter über die in Figur 4 mit b' bezeichnete Ablaufdurchtrittsöffnungen (13), fließt weiter zur Endplatte und verlässt dort die Membranstapeleinheit (1) über eine Ablauföffnung (9).

Im Anschluss an die nachfolgende bipolare Membran (7) wird mit einem sechsten Platzhalter (4) analog des zweiten, dritten, vierten und fünften Platzhalters ein weiterer Prozesskreislauf (eine Natriumhydroxidlösung), beispielsweise über die geöffneten Zulaufdurchtrittsöffnungen (12), in Figur 4 mit d bezeichnet, realisiert. Diese verlässt den Platzhalter über die in Figur 4 mit d' bezeichnete Ablaufdurchtrittsöffnungen (13), fließt weiter zur Endplatte und verlässt dort die Membranstapeleinheit (1) über eine Ablauföffnung (9).

In der Endplatte mit einer Anode (2), zirkuliert der Elektrolyt um die Anode und den Endplatzhalter.

Figur 4 zeigt einen achteckigen Platzhalter (4) mit Zulaufdurchtrittsöffnungen (12) für die Prozesskreisläufe a bis e und Ablaufdurchtrittsöffnungen (13) für die Prozesskreisläufe a' bis e'. Für jeden Prozesskreislauf sind zwei Zulaufdurchtrittsöffnungen (12) (a bis e) und zwei Ablaufdurchtrittsöffnungen (13) (a' bis e') vorhanden. Die Zulaufdurchtrittsöffnungen (12) und Ablaufdurchtrittsöffnungen (13), die den Prozesskreislauf des jeweiligen Platzhaters realisieren sollen, sind als offene Zulaufdurchtrittsöffnungen (12) und offene Ablaufdurchtrittsöffnungen (13) ausgebildet. In Figur 2 sind die mit a und a' bezeichneten Zulaufdurchtrittsöffnungen (12) und Ablaufdurchtrittsöffnungen (13) offen ausgestaltet.

### Beispiel 1

### Gewinnung von Phosphorsäure und Calciumhydroxid aus reinem Calciumhydrogenphosphat

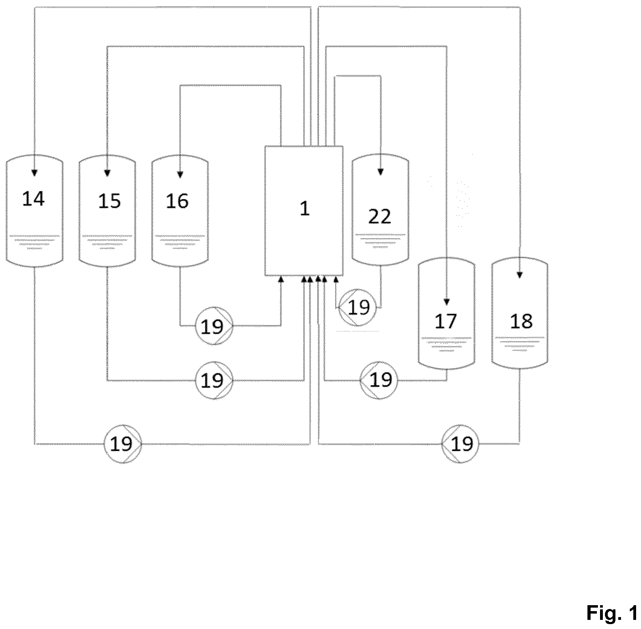

Ausgangsstoff des Verfahrens ist reines Calciumhydrogenphosphat. 500 g des Ausgangsstoffes werden mit 5,5 L 1 M Phosphorsäure (-10 Gew.-%, 1,5-facher stöchiometrischer Überschuss) versetzt. Die erhaltene Calciumdihydrogenphosphatlösung wird direkt dem elektrodialytischen Prozess nach Figur 3 in Kreislauf 4 überführt. In Kreislauf 2 werden 5 L einer 1,5 M Natriumchloridlösung vorgelegt. In den Kreisläufen 1 (3 L), 3 (3 L) und 5 (6 L) wird destilliertes Wasser vorgelegt. Die nach Figur 2 zusammengesetzte Membranstapeleinheit wird mit 10 Zellpaaren, jeweils 2 Stk. Neosepta® CMS, 2 Stk. AMX und 1 Stk. BP1 Membranen und den benötigten Platzhaltern bestückt und nach Figur 1 in den allgemeinen Aufbau der Elektrodialyse eingebaut. Die aktive Membranfläche ergibt sich aus der Größe der Elektroden (Material: Platiniertes Titan, 10*10 cm) zu 100 cm². Die Elektrodialyse wird im Batchbetrieb im Kreislauf betrieben und nach einem Calciumdihydrogenphosphat-Umsatz von 95 % gestoppt.
Unter Berücksichtigung der Hydrathüllenwanderung (z.B. werden mit 1 mol Natriumchlorid 5,5 Mol H₂O transportiert, J. Kielland, J. Chem. Educ. 1937, 14, 412) werden als Hauptprodukt 8 L einer ca. 1,5 M Phosphorsäure aus Kreislauf 5 erhalten. In Kreislauf 4 werden 2,5 L des Diluats mit einem Phosphatgehalt von 0,2 mol/L erhalten. Im Kreislauf 2 ist die Natriumchloridlösung (3,5 L) auf < 0,1 mol/L abgereichert.

Die Lösungen der Kreisläufe 1 und 3 (8,5 L) werden in einem Rührkessel vereint und Calciumhydroxid (243 g) gefällt. Nach Filtration und Trocknung des Feststoffes ergibt sich ein reines Calciumhydroxid. Vorteilhafterweise kann die Kochsalzlösung trotz deren Sättigung mit Ca(OH)₂ ohne Einschränkung erneut im Elektrodialyseprozess eingesetzt werden.

### Beispiel 2

### Gewinnung von Phosphorsäure und Calciumhydroxid aus verunreinigtem Calciumhydrogenphosphat

Ausgangsstoff des Verfahrens ist Calciumhydrogenphosphat aus der Fällung von phosphathaltigen Abwässern mit Calciumhydroxid. Begleitkomponenten sind hauptsächlich Eisen (0,8 Gew.-%), Aluminium (0,2 Gew.-%) und Silicium (0,2 Gew.-%). 500 g des Ausgangsstoffes werden mit 5,5 L 1 M Phosphorsäure (-10 Gew.-%, 1,5-facher stöchiometrischer Überschuss) versetzt. Der überwiegend aus Siliciumdioxid bestehende feste Rückstand (< 3,0 g) wird abfiltriert und die erhaltene Calciumdihydrogenphosphatlösung dem elektrodialytischen Prozess nach Figur 3 in Kreislauf 4 überführt.

In Kreislauf 2 werden 5 L einer 1,5 M Natriumchloridlösung vorgelegt. In den Kreisläufen 1 (3 L), 3 (3 L) und 5 (6 L) wird destilliertes Wasser vorgelegt. Die nach Figur 2 zusammengesetzte Membranstapeleinheit wird mit 10 Zellpaaren, jeweils 2 Stk. Neosepta® CMS, 2 Stk. AMX und 1 Stk. BP1 Membranen und den benötigten Platzhaltern bestückt und nach Figur 1 in den allgemeinen Aufbau der Elektrodialyse eingebaut. Die aktive Membranfläche ergibt sich aus der Größe der Elektroden (Material: Platiniertes Titan, 10*10 cm) zu 100 cm². Die Elektrodialyse wird im Batchbetrieb im Kreislauf betrieben und nach einem Calciumdihydrogenphosphatumsatz von 95 % gestoppt.

Unter Berücksichtigung der Hydrathüllenwanderung werden als Hauptprodukt 8 L einer ca. 1,5 M Phosphorsäure aus Kreislauf 5 erhalten. In Kreislauf 4 werden 2,5 L des Diluats mit einem Phosphatgehalt von 0,2 mol/L erhalten. Im Kreislauf 2 ist die Natriumchloridlösung (3,5 L) auf < 0,1 mol/L abgereichert. Die Lösungen der Kreisläufe 1 und 3 (8,5 L) werden in einem Rührkessel vereint und Calciumhydroxid (243 g) mit den Begleitstoffen Aluminium(III)- (2,7 g) und Eisen(III)-hydroxid (7,2 g) gefällt. Nach Filtration und Trocknung des Feststoffes ergibt sich Calciumhydroxid mit einer Reinheit von ca. 96 Gew.-%, welches zur Abwasserbehandlung phosphathaltiger Abwässer eingesetzt werden kann. Vorteilhafterweise kann die Kochsalzlösung trotz deren Sättigung mit Ca(OH)₂ ohne Einschränkung erneut im Elektrodialyseprozess eingesetzt werden.

**Spezifikationen der eingesetzten Elektrodialyse-Membranen.**

| Membranbezeichnung | Typ | Dicke [mm] | Anion/Kation Festladungsdichte [meq·g⁻¹] | Elektrischer Widerstand [Ω·cm⁻¹] |
|---|---|---|---|---|
| Neosepta® CMX | Standard-Kationenaustauschermembran | 0,14...0,20 | 1,5...1,8 | 2,5...3,5 |
| Neosepta® CMS | Monoselektive Kationenaustauschermembran | 0,14...0,17 | 2,0...2,5 | 1,5...3,5 |
| Neosepta® AMX | Standard-Anionenaustauschermembran | 0,12...0,18 | 1,4...1,7 | 2,0...3,5 |
| Neosepta® ACS | Monoselektive Anionenaustauschermembran | 0,12...0,20 | 1,4...2,0 | 3,0...6,0 |

### Bezugszeichen

- 1: Membranstapeleinheit,
- 2: Endplatte mit Anode,
- 3: Endplatte mit Kathode,
- 4: Platzhalter,
- 5: Kationenaustauschermembran,
- 6: Anionenaustauschermembran,
- 7: bipolare Membran,
- 8: Zulauföffnungen,
- 9: Ablauföffnungen,
- 10: Zulaufaustrittsöffnungen,
- 11: Ablaufaustrittsöffnungen,
- 12: Zulaufdurchtrittsöffnungen,
- 13: Ablaufdurchtrittsöffnungen,
- 14: Vorratsbehälter,
- 15: Behälter,
- 16: Sammelbehälter,
- 17: Gefäß,
- 18: Behältnis,
- 19: Einrichtung zum Fördern,
- 20: Endplattengewindestangenaussparungen,
- 21: Elektrodenanschluss,
- 22: Tank.

## Patentansprüche

1. Verfahren zur elektrodialytischen Herstellung von Phosphorsäure und Calciumhydroxid, bei dem ein verunreinigtes wässriges Diluat, enthaltend mindestens ein gelöstes Calciumphosphatsalz, und eine wässrige Lösung, enthaltend Natriumchlorid, durch eine 5-Kammer-Elektrodialysezelle geleitet werden, wobei Calciumphosphatsalz und Natriumchlorid mittels Transport ionischer Komponenten über lonenaustauschermembranen unter Triebkraft eines elektrischen Feldes in ein Calciumchlorid-haltiges wässriges Konzentrat, eine wässrige Phosphorsäure und Natronlauge getrennt werden, wobei Diluat, die wässrige Lösung, Konzentrat, Phosphorsäure und Base in fünf Prozessströmen über ein Membranstack mit fünf durch lonenaustauschermembranen getrennten durchströmbaren Räumen und einer bipolaren Membran im kontinuierlichen Kreislauf geführt werden, wobei durch Mischen von Natronlauge und Konzentrat Calciumhydroxid gefällt wird.

2. Verfahren nach Anspruch 1, **dadurch gekennzeichnet, dass** das Calciumphosphatsalz Calciumdihydrogenhosphat ist.

3. Verfahren nach einem der Ansprüche 1 oder 2, **dadurch gekennzeichnet, dass** ein zusätzlicher Elektrolyt mindestens eine Elektrode umspült und ausgewählt ist aus einem Phosphatsalz, einem Sulfatsalz und einem Nitratsalz.

4. Vorrichtung zur elektrodialytischen Herstellung von Phosphorsäure und Calciumhydroxid, umfassend die Komponenten
a) eine Membranstapeleinheit (1), aufweisend die Komponenten eine Endplatte (2), aufweisend eine Anode, eine Endplatte (3), aufweisend eine Kathode, sieben Platzhalter (4), drei Kationenaustauschermembranen (5), zwei Anionenaustauschermembranen (6) und eine bipolare Membran (7), wobei die Endplatten 5 Zulauföffnungen (8), 5 Ablauföffnungen (9), 10 Zulaufaustrittsöffnungen (10) und 10 Ablaufaustrittsöffnungen (11) aufweisen und wobei die Zulauföffnungen (8) mit den Zulaufaustrittsöffnungen (10) und die Ablauföffnungen (9) mit den Ablaufaustrittsöffnungen (11) über kommunizierende Kanäle verbunden sind und wobei die Platzhalter, die Kationenaustauschermembranen, die Anionenaustauschermembranen und die bipolare Membran jeweils 20 Durchtrittsöffnungen aufweisen und wobei 10 der Durchtrittsöffnungen als Zulaufdurchtrittsöffnungen (12) und 10 der Durchtrittsöffnungen als Ablaufdurchtrittsöffnungen (13) ausgebildet sind und wobei die Zulaufaustrittsöffnungen (10) und die Zulaufdurchtrittsöffnungen (12) deckungsgleich übereinander liegen und wobei die Ablaufaustrittsöffnungen (11) und die Ablaufdurchtrittsöffnungen (13) deckungsgleich übereinander liegen,
b) ein Vorratsbehälter (14) für ein verunreinigtes wässriges Diluat,
c) einen Behälter (15) für eine wässrige Base,
d) einen Sammelbehälter (16) für ein Konzentrat,
e) ein Gefäß (17) für einen zusätzlichen Elektrolyten,
f) ein Behältnis (18) für eine wässrige Phosphorsäure,
wobei der Vorratsbehälter, der Behälter, der Sammelbehälter, das Gefäß und das Behältnis über kommunizierende Leitungen mit der Membranstapeleinheit verbunden sind und wobei die Membranstapeleinheit über rückläufige kommunizierende Leitungen mit dem Vorratsbehälter, dem Behälter, dem Sammelbehälter, dem Gefäß und dem Behältnis verbunden sind,
wobei die Endplatten, die Platzhalter und/oder die lonenaustauschermembranen die Form eines regelmäßigen Achtecks aufweisen,
wobei sich die Zulauföffnungen (8) und Ablauföffnungen (9) an den acht gleich großen rechteckigen Seitenwänden der Endplatten und die Zulaufaustrittsöffnungen (10) und Ablaufaustrittsöffnungen (11) auf einer der Achteckflächen befinden.

5. Vorrichtung nach Anspruch 4 oder 5, **dadurch gekennzeichnet, dass** die Endplatten, die Platzhalter und die lonenaustauschermembranen jeweils mindestens eine Endplattengewindestangenaussparung (20) aufweisen, die deckungsgleich übereinander liegen.

6. Vorrichtung nach Anspruch 4 bis 7, **dadurch gekennzeichnet, dass** jeder Platzhalter in der Mitte seiner größten Fläche eine zusätzliche Öffnung aufweist.

## Claims

1. Method for electrodialytically preparing phosphoric acid and calcium hydroxide, in which method a contaminated aqueous diluate, containing at least one dissolved calcium phosphate salt, and an aqueous solution, containing sodium chloride, are conducted through a five-chamber electrodialysis cell, wherein calcium phosphate salt and sodium chloride are, by transporting ionic components over ion exchange membranes under the driving force of an electric field, separated into a calcium-chloride-containing aqueous concentrate, an aqueous phosphoric acid and sodium hydroxide solution, wherein diluate, the aqueous solution, concentrate, phosphoric acid and base are continuously recirculated in five process streams over a membrane stack having five permeable spaces separated by ion exchange membranes and a bipolar membrane, wherein calcium hydroxide is precipitated by mixing sodium hydroxide solution and concentrate.

2. Method according to claim 1, **characterised in that** the calcium phosphate salt is calcium dihydrogen phosphate.

3. Method according to either claim 1 or claim 2, **characterised in that** an additional electrolyte flows round at least one electrode and is selected from a phosphate salt, a sulphate salt and a nitrate salt.

4. Device for electrodialytically preparing phosphoric acid and calcium hydroxide, comprising the components:
a) a membrane stack unit (1), comprising the components: an end plate (2), comprising an anode, an end plate (3), comprising a cathode, seven place holders (4), three cation exchange membranes (5), two anion exchange membranes (6) and a bipolar membrane (7), wherein the end plates comprise five inlet openings (8), five outlet openings (9), ten inlet discharge openings (10) and ten outlet discharge openings (11) and wherein the inlet openings (8) are connected to the inlet discharge openings (10) and the outlet openings (9) are connected to the outlet discharge openings (11) via communicating channels and wherein the place holders, the cation exchange membranes, the anion exchange membranes and the bipolar membrane each have 20 through-openings and wherein ten of the through-openings are designed as inlet through-openings (12) and ten of the through-openings are designed as outlet through-openings (13) and wherein the inlet discharge openings (10) and the inlet through-openings (12) lie congruently one on top of the other and wherein the outlet discharge openings (11) and the outlet through-openings (13) lie congruently one on top of the other,
b) a reservoir (14) for a contaminated aqueous diluate,
c) a vessel (15) for an aqueous base,
d) a collecting vessel (16) for a concentrate,
e) a receptacle (17) for an additional electrolyte,
f) a container (18) for an aqueous phosphoric acid,
wherein the reservoir, the vessel, the collecting vessel, the receptacle and the container are connected to the membrane stack unit via communicating channels and wherein the membrane stack unit is connected to the reservoir, the vessel, the collecting vessel, the receptacle and the container via retrograde communicating lines,
wherein the end plates, the place holders and/or the ion exchange membranes have the shape of a regular octagon,
wherein the inlet openings (8) and outlet openings (9) are located in the eight equally sized rectangular side walls of the end plates and the inlet discharge openings (10) and outlet discharge openings (11) are located in one of the octagonal faces.

5. Device according to claim 4 or 5, **characterised in that** the end plates, the place holders and the ion exchange membranes each comprise at least one end-plate threaded-rod recess (20), which recesses lie congruently one on top of the other.

6. Device according to claim 4 to 7, **characterised in that** each place holder has an additional opening in the centre of its largest face.

## Revendications

1. Procédé de fabrication électrodialytique d'acide phosphorique et d'hydroxyde de calcium, dans lequel un diluat aqueux chargé d'impuretés, contenant au moins un sel de phosphate de calcium dissous, et une solution aqueuse, contenant du chlorure de sodium, sont conduits à travers une cellule d'électrodialyse à 5 chambres, le sel de phosphate de calcium et le chlorure de sodium étant séparés par transport de composants ioniques sur des membranes échangeuses d'ions à l'aide de la force motrice d'un champ électrique, en un concentrat aqueux, contenant du chlorure de calcium, un acide phosphorique aqueux et une soude caustique, le diluat, la solution aqueuse, le concentrat, l'acide phosphorique et la base étant dirigés, en cinq flux de traitement, par un empilement de membranes comprenant cinq chambres pouvant être traversées séparées par des membranes échangeuses d'ions, et par une membrane bipolaire en circuit continu, de l'hydroxyde de calcium étant précipité par le mélange de soude caustique et de concentrat.

2. Procédé selon la revendication 1, **caractérisé en ce que** le sel de phosphate de calcium est du phosphate de dihydrogène de calcium.

3. Procédé selon l'une des revendications 1 ou 2, **caractérisé en ce qu'**un électrolyte supplémentaire entoure au moins une électrode et est choisi parmi un sel de phosphate, un sel de sulfate et un sel de nitrate.

4. Dispositif de fabrication électrodialytique d'acide phosphorique et d'hydroxyde de calcium, comprenant les composants suivants :
a) une unité d'empilement de membranes (1) comportant les composants suivants: une plaque d'extrémité (2) comportant une anode, une plaque d'extrémité (3) comportant une cathode, sept emplacements (4), trois membranes échangeuses de cations (5), deux membranes échangeuses d'anions (6) et une membrane bipolaire (7), les plaques d'extrémité comportant 5 ouvertures d'admission (8), 5 ouvertures d'évacuation (9), 10 ouvertures de sortie d'admission (10) et 10 ouvertures de sortie d'évacuation (11), et les ouvertures d'admission (8) étant reliées aux ouvertures de sortie d'admission (10), et les ouvertures d'évacuation (9) aux ouvertures de sortie d'évacuation (11), par des conduits communicants, et les emplacements, les membranes échangeuses de cations, les membranes échangeuses d'anions et la membrane bipolaire comportant chacun 20 ouvertures de passage, et 10 des ouvertures de passage étant conçues comme des ouvertures de passage d'admission (12) et 10 des ouvertures de passage étant conçues comme des ouvertures de passage d'évacuation (13), et les ouvertures de sortie d'admission (10) et les ouvertures de passage d'admission (12) se recouvrant de manière exacte, et les ouvertures de sortie d'évacuation (11) et les ouvertures de passage d'évacuation (13) se recouvrant de manière exacte,
b) un réservoir de stockage (14) destiné à un diluat aqueux chargé d'impuretés,
c) un réservoir (15) destiné à une base aqueuse,
d) un réservoir collecteur (16) destiné à un concentrat,
e) un récipient (17) destiné à un électrolyte supplémentaire,
f) un contenant (18) destiné à un acide phosphorique aqueux,
le réservoir de stockage, le réservoir, le réservoir collecteur, le récipient et le contenant étant reliés à l'unité d'empilement de membranes par des conduits communicants, et l'unité d'empilement de membranes étant reliée au réservoir de stockage, au réservoir, au réservoir collecteur, au récipient et au contenant par des conduits communicants à circulation inverse, les plaques d'extrémité, les emplacements et/ou les membranes échangeuses d'ions ayant la forme d'un octogone régulier,
les ouvertures d'admission (8) et les ouvertures d'évacuation (9) au niveau des huit parois latérales rectangulaires de même dimension des plaques d'extrémité et les ouvertures de sortie d'admission (10) et les ouvertures de sortie d'évacuation (11) se trouvant sur l'une des surfaces de l'octogone.

5. Dispositif selon la revendication 4 ou 5, **caractérisé en ce que** les plaques d'extrémité, les emplacements et les membranes échangeuses d'ions comportent chacun au moins un évidement à tige filetée de plaque d'extrémité (20), lesquels se recouvrent de manière exacte.

6. Dispositif selon l'une des revendications 4 à 7, **caractérisé en ce que** chaque emplacement comporte au milieu de sa surface la plus grande une ouverture supplémentaire.
